(19) **Europäisches Patentamt / European Patent Office / Office européen des brevets**

(11) **EP 1 927 072 B1**

(12) **EUROPEAN PATENT SPECIFICATION**

(45) Date of publication and mention
of the grant of the patent:
**25.01.2012 Bulletin 2012/04**

(21) Application number: **06809349.1**

(22) Date of filing: **20.09.2006**

(51) Int Cl.:
***G06K 19/07*** (2006.01)

(86) International application number:
**PCT/IB2006/053390**

(87) International publication number:
**WO 2007/034421 (29.03.2007 Gazette 2007/13)**

(54) **RADIO FREQUENCY IDENTIFICATION DEVICE SYSTEMS**

VORRICHTUNGSSYSTEME FÜR FUNKFREQUENZIDENTIFIKATIONEN

SYSTEME A DISPOSITIF D'IDENTIFICATION DE RADIOFREQUENCE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **23.09.2005 ZA 200507717**

(43) Date of publication of application:
**04.06.2008 Bulletin 2008/23**

(73) Proprietor: **IPICO Innovation Inc
Aurora, ON L4G 6H8 (CA)**

(72) Inventor: **VAN EEDEN, Hendrik, Lodewyk
0181 Pretoria (ZA)**

(74) Representative: **Gill, David Alan
W.P. Thompson & Co.
55 Drury Lane
London WC2B 5SQ (GB)**

(56) References cited:
**EP-A2- 1 473 663     WO-A-99/39450**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

THIS INVENTION relates to radio frequency identification device systems. In particular, this invention relates to a passive transponder, and to a method of data communication between an interrogator and a passive transponder.

WO 99/39450 discloses a transceiver with a modulated series resistor and a switch between an antenna and a storage capacitor in an AC part or a DC part of the transceiver, or with a modulated series resistor between the antenna and a tuning capacitor of the antenna.

EP 1473663 discloses a method of conveying information from an electronic identification label to an interrogator which includes coupling energy from an external field into a resonant circuit of the electronic identification label. The electronic identification label periodically stores and discharges energy with a period that conveys information about the electronic identification label to the interrogator.

According to a first aspect of the invention, broadly, there is provided a passive transponder according to claim 1.

An antenna of an interrogator transmits, in use, a radio frequency wave to create a proximate time-varying electromagnetic field. A passive transponder entering said electromagnetic field couples inductively to the interrogator, consequent to which a voltage is induced across an antenna coil of a resonator circuit forming part of the transponder. The resonator circuit responds to or resonates at frequencies close to its natural frequency much more strongly than it responds to other frequencies, which is desirable to maximise induction of the voltage across the antenna coil during powering of the transponder.

Further, it is desirable to maintain the induced voltage across the antenna coil even after termination of the transmitted radio frequency signal (e.g. leading powering signal) for powering the transponder to perform its associated functions. One way of maintaining the voltage across the antenna coil is to maximise the electrical load resistance or to minimize the series resistance of the resonator circuit.

Generally, in an electrically resonator circuit or system, by Q factor (Quality factor) is meant a factor which represents the effect of electrical resistance of a resonator circuit, or which indicates the amount of resistance to resonance in a system. A system with a high Q factor resonates with greater amplitude at its resonant frequency than a system with a low Q factor.

On the other hand, damping a resonator circuit by reducing the electrical load resistance or increasing the series resistance of the resonator circuit has an opposite effect as described above, i.e. resonating with a lesser amplitude at its resonant frequency. This will result in a rapid decay of the induced voltage across the antenna coil after termination of the radio frequency signal from the interrogator.

Accordingly, decreasing a Q factor (or increasing the damping ability) of a resonant circuit permits rapid decay of an induced voltage over the antenna coil of the resonator circuit, and increasing a Q factor of the resonant circuit facilitates slow decay of an induced voltage over the antenna coil of the resonator circuit after termination of the incoming radio frequency signal.

Keeping in mind that the damping of the resonator circuit permits rapid changes in the induced voltage over the antenna coil of the transponder, it will be appreciated that the Q factor is related to a permissible bandwidth of the resonator circuit, and the Q factor can be defined as the resonant frequency of the resonator circuit (or centre frequency) divided by the bandwidth of the resonator circuit. The centre frequency ($f_c$) is the frequency at which there is maximum resonance (peak frequency), while the bandwidth ($\Delta f$) is defined as the 3 dB change in level on either side ($f_1$, $f_2$) of the centre frequency ($f_c$).

Defined mathematically, $Q = \dfrac{f_c}{f_2 - f_1} = \dfrac{f_c}{\Delta f}$ . Therefore, stated differently, the Q factor may be increased either by increasing the centre frequency ($f_c$) or by decreasing the bandwidth ($\Delta f$). As stated above, damping decreases the Q factor.

The power storing arrangement may include a voltage rectifier and storage module (e.g. storage capacitor) for rectifying the induced voltage over the antenna coil of the transponder, which induced voltage may be applied to charge the storage capacitor for storing at least part of the electrical energy which is induced by inductive coupling of the transponder antenna coil during transmission of the leading powering signal.

Once the storage capacitor is charged, and after termination of the powering signal, the induced voltage over the antenna coil of the transponder circuit decays characteristically of the high Q-factor (i.e. fairly slowly). The transponder may include a carrier peak detector for detecting or monitoring a voltage level or peak of the induced voltage over the antenna coil of the transponder resonator circuit and for relaying a peak signal representative of said detected voltage peak to the Q factor controller.

The Q factor controller may include a resistive load which is electrically removably connectable to the resonator circuit for changing the Q factor of the resonator circuit between the high Q factor mode, in which mode the transponder antenna coil is configured to receive the powering signal, and the low Q factor mode, in which mode the resonator circuit is configured to receive the modulated data signal.

The transponder may include a comparator which may be configured or configurable to include a user determined voltage threshold, the voltage threshold being comparable to the detected voltage peak which is relayed from the carrier peak detector, in which case, the comparator triggers the Q factor controller to change the resonator circuit to its low Q factor mode when the detected voltage peak drops below the voltage threshold, in which mode the resonator circuit is configured to receive the modulated data signal.

The resistive load may be electrically removably connectable to the resonator circuit by switching operation of an electrical switch such as a transistor. To this end, the storage capacitor may provide electrical power to components of the transponder and the resonator circuit may be switched to its low Q factor mode, in which mode the resonator circuit is configured to receive the modulated data signal.

In one embodiment of the invention, the transponder further includes an additional resonator circuit for transmitting data to the interrogator. In such case, the first resonator circuit may be for receiving the powering signal and the modulated data signal from the interrogator, and the additional or second resonator circuit which forms part of a transponder transmitter circuit may be for transmitting data to the interrogator.

The transponder may also include a digital processing arrangement which may include a digital interface for connection to a digital peripheral device, and a digital memory storage module.

According to a second aspect of the invention, broadly, there is provided a method of operating a passive transponder, according to claim 9.

The method may include switching the resonator circuit to the high Q factor mode before the leading powering signal is received.

Switching the resonator circuit of the transponder to the high Q factor mode and switching the resonator circuit of the transponder to the low Q factor mode may include disconnecting and connecting a resistive load or a series resistance to the resonator circuit respectively.

Storing at least part of the electrical energy which is induced by inductive coupling of the transponder antenna coil during transmission of the leading powering signal may include rectifying the voltage induced over the antenna coil of the resonator circuit and charging a storage capacitor for supplying power to the transponder after termination of the powering signal.

Switching the resonator circuit of the transponder to the low Q factor mode may include monitoring a decay of the induced voltage over the antenna coil of the transponder after termination of the powering signal. A peak signal corresponding to the decay of the induced voltage may be relayed to a comparator which, in turn, compares the peak signal to a predetermined threshold. The comparator may switch the resonator circuit of the transponder to its low Q factor mode in response to the peak signal dropping below the predetermined threshold voltage.

Receiving a trailing modulated data signal by the transponder may include receiving a burst of radio frequency signals which comprise a series of varying amplitudes representative of digital data e.g. an amplitude modulation technique can be employed, in which case a high amplitude of the transmitted signal represents a digital one and a lower or zero amplitude of the transmitted signal represents a digital zero, or vice versa.

The method may include addressing a transponder uniquely by transmitting a digital address of the transponder as part of the modulated data signal. It will be appreciated that in such case a transponder announces itself in conventional fashion by sending its unique address to the interrogator. In the instance when other transponders are present in an interrogation range of the interrogator, the other transponders merely discard the data from the modulated data signal if the transmission is not addressed to them.

The invention will now be described by way of example with reference to the accompanying diagrammatic drawings, in which:

> Figure 1 is a schematic block diagram of a radio frequency identification system which includes a passive transponder, in accordance with the invention;
> Figure 2 is a graph showing a series of radio waves transmitted by an interrogator, and showing a peak voltage signal which corresponds to an induced voltage over an antenna coil of the transponder in Figure 1; and
> Figure 3 is a schematic block diagram of another embodiment of a passive transponder in accordance with the invention.

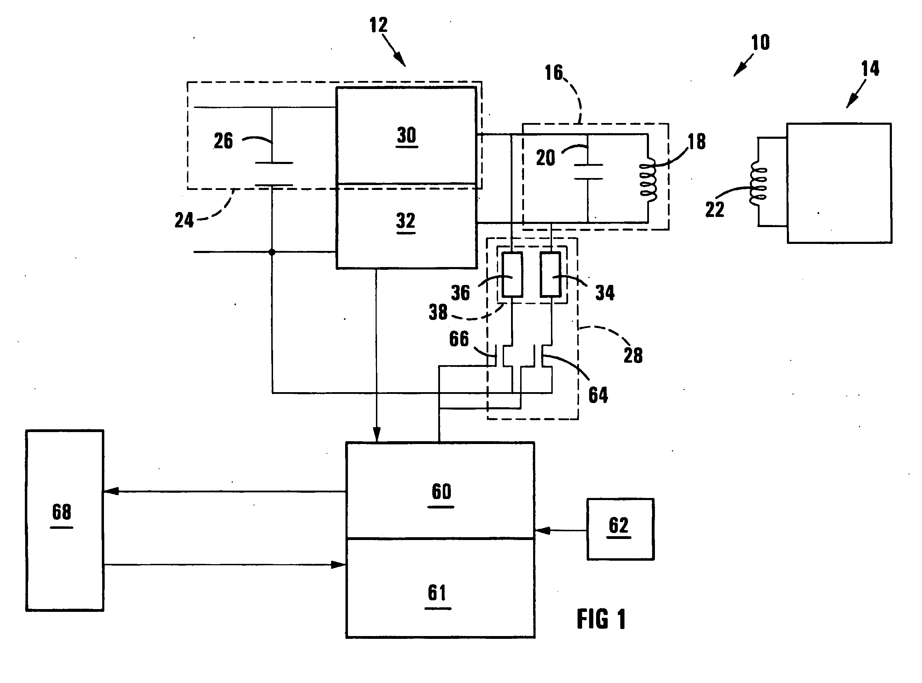

In Figure 1 of the drawings, reference numeral 10 generally indicates a radio frequency identification system which includes a passive transponder 12, in accordance with the invention; and an interrogator 14.

The transponder 12 includes a resonator circuit, generally indicated by reference numeral 16, which comprises a transponder antenna coil 18 and a transponder tuning capacitor 20 connected in parallel relationship with the antenna coil 18, thus forming a parallel LC resonating circuit.

The transponder antenna coil 18 is for inductively coupling to an interrogator antenna coil 22 from which a series of radio frequency signals are transmitted, in use.

The interrogator antenna coil 22 of the interrogator 14 transmits a radio frequency wave to create a proximate time-varying electromagnetic field. The passive transponder 12 entering said electromagnetic field couples inductively to the interrogator 14, consequent to which a voltage is induced across the antenna coil 18 of the resonator circuit 16 of the transponder 12.

The tuned resonator circuit 16 responds to or resonates at frequencies close to its natural frequency $(f_c)$, which frequency corresponds to that of the transmitted radio frequency signal, much more strongly than the circuit 16 responds to other frequencies, which is desirable to maximise induction of the voltage across the antenna coil 18.

It is desirable to maintain the induced voltage across the antenna coil 18 even after termination of the transmitted radio frequency signal for powering the transponder 12 to perform its associated functions. One way to facilitate maintenance of the induced voltage across the antenna coil 18 is to maximise the load resistance or to minimise the series resistance of the resonator circuit 16.

On the other hand, it is desirable to permit fast decaying of the induced voltage over the antenna coil 18 when wireless data communication is effected to the transponder 12, thereby to increase a potential data communication rate or bandwidth (e.g. frequency response) of the transponder 12.

A person skilled in the art, will appreciate that in an electrical resonator circuit or system, by Q (Quality) factor is meant a factor which represents the effect of electrical resistance (or other cause of energy loss) of a resonator circuit, or which indicates the amount of resistance to resonance in a system. The Q factor also indicates the rate of increase of a system's amplitude when energised at its resonant frequency compared with the amplitude at non-resonant frequencies.

Damping a resonator circuit by reducing the load resistance or increasing the series resistance of the resonator circuit has an opposite effect as described above, i.e. resonating with a lesser amplitude at its resonant frequency. This will result in a rapid decay of the induced voltage across the antenna coil after termination of the receipting radio frequency signal from the interrogator.

Accordingly, decreasing the Q factor (or increasing the damping ability) of a resonant circuit permits rapid decay of an induced voltage over the antenna coil of the resonator circuit, and increasing the Q factor of the resonant circuit facilitates slow decay of an induced voltage over the antenna coil of the resonator circuit after termination of the transmitted radio frequency signal.

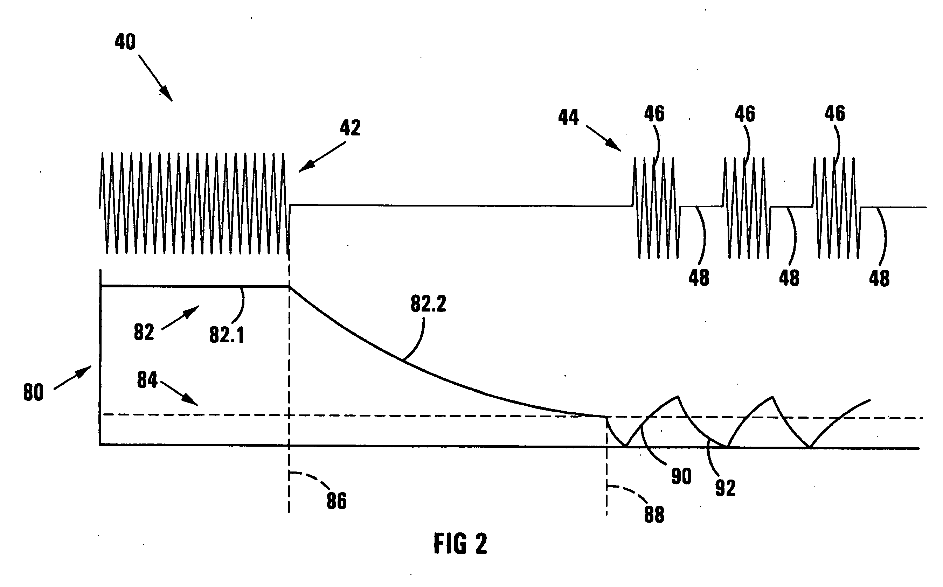

With reference to Figure 2, reference numeral 40 indicates a burst of radio frequency signals transmitted from the interrogator 14. The burst of RF signals 40 comprises a leading powering signal 42 and a trailing modulated data signal 44. The modulated data signal 40 is in the form of an amplitude modulated signal where a higher amplitude portion 46 represents a digital one and a lower or zero amplitude portion 48 represents a digital zero.

A passive transponder is powered up during transmission of the powering signal 42, after which data communication commences during transmission of the modulated data signal 44. It will be appreciated that frequent powering up of the passive transponder 12 is required to supply electrical power to the passive transponder 12 for effecting data communication to the passive transponder 12. Frequent powering up of the passive transponder 12 reduces the length of time slots available during which data can be sent to the transponder.

Accordingly, the transponder 12 includes a power storing arrangement, generally indicated by reference numeral 24, for storing at least part of the electrical energy which is generated by inductive coupling of the transponder antenna coil 18 during transmission of the leading powering signal 42, thereby to provide an onboard power supply during data communication operation to the transponder 12. Storing electrical power in this way permits a longer duration of power supply to the transponder from the storage arrangement 24, as opposed to powering up the transponder 12 more frequently by sending more frequent powering up signals, the result of which permits longer time slots for transmission of a modulated data signal 44, which, in turn, facilitates faster data communication to the transponder 12.

The power storing arrangement 24 includes a voltage rectifier 30 for rectifying the induced voltage over the antenna coil 18 of the resonator circuit 16, which rectified voltage is applied to charge a storage capacitor 26 for storing at least part of the electrical energy which is generated by inductive coupling of the transponder antenna coil 18 during transmission of the leading powering signal 42.

Once the storage capacitor 26 is charged, and after termination of the powering signal 42, the induced voltage over the antenna coil 18 of the resonator circuit 16 decays, in use, characteristically of the Q factor of the resonator circuit 16.

Moreover, it is desirable that the resonator circuit 16 allows a high data communication transmission rate. This is effected, in accordance with the invention, by changing the bandwidth of the resonator circuit 16 to a mode in which the induced voltage over the antenna coil 18 of the resonator circuit 16 responds or changes rapidly, allowing fast detection of a change in amplitude of the modulated data signal 44, thus allowing a higher bandwidth for the resonator circuit 16 and thus for the transmitted modulated data signal 44.

Accordingly, the transponder 12 also includes a quality factor controller, generally indicated by reference numeral, 28 for changing a Q-factor of the resonator circuit 16 between a high Q-factor mode, in which mode the transponder antenna coil 18 receives the powering signal 42, and a low Q factor mode, in which mode the resonator circuit 16 receives the modulated data signal 44.

Keeping in mind that the damping of a resonator circuit permits rapid changes in the induced voltage over the antenna coil of the transponder, it will be appreciated that the Q factor is related to a permissible bandwidth of the resonator circuit, and the Q factor can be defined as the resonant frequency of the resonator circuit (or centre frequency) divided by the bandwidth of the resonator circuit. Thus, increasing the Q factor reduces the bandwidth of the resonator circuit.

The transponder 12 further includes a carrier peak detector 32 for detecting or monitoring a voltage peak of the induced voltage over the antenna coil 18 of the transponder resonator circuit 16 and for relaying a peak voltage signal which corresponds to the induced voltage to the quality factor controller 28.

The quality factor controller 28 includes a resistive load circuit, generally indicated by reference numeral 38, which is electrically removably connectable to the resonator circuit 16 for changing the Q-factor of the resonator circuit 16 between the high Q-factor mode, in which mode the transponder antenna coil 18 receives the powering signal 42, and a low Q-factor mode, in which mode the resonator circuit 18 receives the modulated data signal 44.

The transponder 12 also includes a comparator 60 which is configured to include a user determined voltage threshold 62, the voltage threshold 62 being comparable to the detected voltage peak signal which is relayed from the carrier peak detector 32. The comparator 60 is dual-functional; first it triggers the quality factor controller 28 to switch the resonator circuit 16 between its low- and high Q factor modes, as is explained in more detail below, and secondly it identifies modulated digital data when the resonator circuit 18 receives the modulated data signal 44.

The resistive load circuit 38, in the illustrated embodiment of the invention, comprises two resistors 34, 36, each resistor 34, 36 being connected to an associated branch of the resonator circuit 16 of the transponder 12. The resistive loads 34, 36 are electrically removably connectable to the resonator circuit 16 by switching of respective electrical switches which are in the form of MOSFET (Metal Oxide Semiconductor Field-Effect Transistor) transistors 64, 66.

The transponder 12 includes a demodulator for retrieving the data from the modulated data signal, in use, as explained in more detail blow.

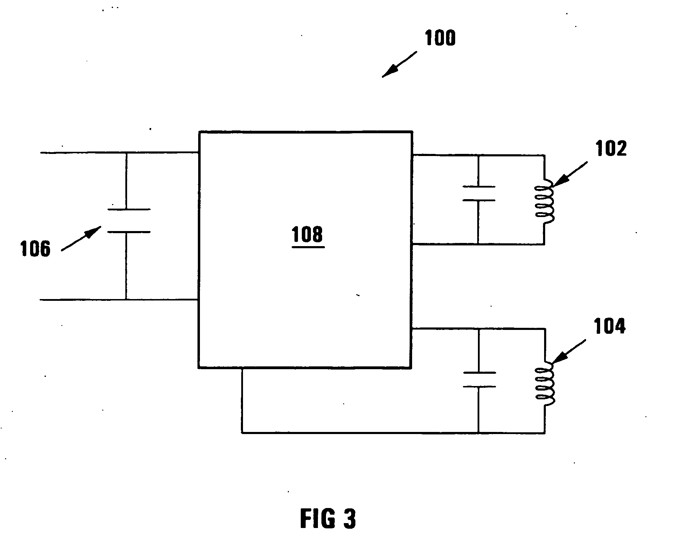

In another embodiment of the invention (see Figure 3) a transponder 100 in accordance with the invention includes a first resonator circuit 102, an electrical storage arrangement 106 and a quality factor controller arrangement which is in block 108, similarly as describe above. In addition, the transponder 100 includes also a second resonator circuit 104 for transmitting data to the interrogator. In the transponder 100, the first resonator circuit 102 is for receiving the powering signal and the modulated data signal from the interrogator, and the second resonator circuit 104 which forms part of a transponder transmitter circuit is for transmitting data to the interrogator. The transponder 100 thus may be of the type described in WO 02/091290, which is fully incorporated in its entirety herein, the transponder 100 including the inventive features as herein described.

The transponder 12 includes a digital processing arrangement 68. The digital processing arrangement 68 includes a data memory for storing a digital address of the transponder 12, and a digital interface for connection to digital peripheral devices (not shown).

In use, if data transmission to the transponder 12 from the interrogator 14 is desired, a series of radio frequency signals 40 is transmitted from the interrogator 14, which series of radio frequency signals 40 comprises the powering signal 42 and the modulated data signal 44.

Initially, the resonator circuit 16 of the transponder 12 is in its high Q factor mode due to the transistors 64, 66 being switched off so that the resistors 34, 36 are disconnected from the resonator circuit 16. In this high Q factor mode of the resonator circuit 16 the voltage induction over the antenna coil 18 of the resonator circuit 16 is maximized for charging the storage capacitor 26.

With reference to Figure 2, graph 80 shows two curves 82 and 84. Curve 82 is the peak output signal from the peak detector 32 which corresponds to the induced voltage over the antenna coil 18 of the resonator circuit 16. Hereafter curve 82 is referred to as the peak voltage 82. Curve 84 is a constant threshold voltage which is user definable and maintained as reference to the comparator 60 from the threshold circuit 62, herein after referred to as the threshold voltage 84.

During transmission of the powering signal 42 the peak voltage is a maximum, at curve 82.1. When the power signal 42 is terminated at point 86 on the graph 80, the peak voltage 82 decays, at curve 82.2, and it can be seen the curve 82.2 decays relatively slowly which is mainly due to the high Q factor of the resonator circuit 16.

When the peak voltage 82 drops below the threshold voltage 84 at point 88, a switch controller 61 switches the transistors 64, 66 on to connect the resistors 34, 36 to the resonator circuit 16 of the transponder 12, the effect of which is to switch the resonator circuit 16 to its low Q factor mode. As explained above, in this low Q factor mode the damping ability of the resonator circuit is increased so that more rapid increases and decreases of the peak voltage is achieved as a result of changes in the transmitted radio frequency signal 40.

The modulated data signal 44 in Figure 2 comprises three short bursts of radio frequency signals 46. The duration of each burst is relatively short in comparison to the powering signal 42; nevertheless, a fluctuation in peak voltage is more rapid because of the low Q factor of the resonator circuit 16.

The duration of one high amplitude burst 46 is selected to permit a rise 90 of the peak output voltage which rise is rapid enough to rise within a desirably short time period above the threshold voltage 84, and the duration of a low or zero amplitude 48 is selected to permit a drop 92 below the threshold voltage 84. Simultaneously, the comparator 60 compares the peak voltage rises 90 and drops 92, a rise above the threshold voltage 84 representing a digital one and a drop below the threshold voltage 84 representing a digital zero. The digital ones and zeroes (digital data) corresponding to the modulated data signal 44 are relayed to the digital processing arrangement 68.

To this end, the storage capacitor 26 provides electrical power to the transponder 12 during data communication.

Advantageously, faster data communication rates are achieved by the transponder 12, first by charging the storage capacitor 26 for supplying power to the transponder components so that a longer duration of time slots is available in which data can be transmitted to the transponder 12, and secondly by switching the resonator circuit 16 to its low Q factor mode during reception of the data modulation signal, which lower Q factor allows rapid fluctuation (i.e. quicker frequency response) of the peak voltage so that short bursts of signals can create an adequate rise and fall of the peak output voltage which can be detected and demodulated.

**Claims**

1. A passive transponder (12) which includes a resonator circuit (16) to receive a powering signal (42) thereby to provide electrical energy to the transponder (12) by inductive coupling, the resonator circuit (16) being switchable between a high Q factor mode in which an induced voltage in the resonator circuit (16) decays slowly, and a low Q factor mode in which an induced voltage in the resonator circuit (16) decays more quickly, and the transponder (12) including a power storing arrangement (24) to store at least a portion of the electrical energy obtained from the powering signal (42), said resonator circuit (16) has a transponder antenna coil (18) for inductively coupling to an interrogator antenna (22) from which a series of radio frequency signals are transmitted or transmittable, characterised that the series of radio frequency signals comprise a leading powering signal (42) and a trailing modulated data signal (44) and that said power storing arrangement (24) is operable to store at least part of the electrical energy which is induced by inductive coupling of the transponder antenna coil (18) during transmission of the leading powering signal (42), the transponder (12) further includes
a demodulating arrangement (68) for demodulation of the trailing modulated data signal (44); and
a Q factor controller (28) for changing the Q factor of the resonator circuit (16) between said high Q factor mode, in which mode the transponder antenna coil (18) is configured to receive the powering signal (42), and said low Q factor mode, in which mode the resonator circuit (16) is configured to receive the modulated data signal (44).

2. A passive transponder (12) as claimed in claim 1, in which the power storing arrangement (24) includes a voltage rectifier (30) and storage capacitor (26) for rectifying the induced voltage over the antenna coil (18) of the transponder (12), which induced voltage is applied to charge the storage capacitor (26) for storing at least part of the electrical energy which is induced by inductive coupling of the transponder antenna coil (18) during transmission of the leading powering signal (42).

3. A passive transponder (12) as claimed in claim 1 or claim 2, which includes a carrier peak detector (32) for detecting or monitoring a voltage peak of the induced voltage over the antenna coil (18) of the transponder resonator circuit (16) and for relaying a peak signal representative of said detected voltage peak to the Q factor controller (28).

4. A passive transponder (12) as claimed in claim 3, which includes a resistive load (34,36) which is electrically removably connectable to the resonator circuit (16) for changing the Q factor of the resonator circuit (16) between the high Q factor mode, in which mode the transponder antenna coil (18) is configured to receive the powering signal (42), and the low Q factor mode, in which mode the resonator circuit (16) is configured to receive the modulated data signal (44).

5. A passive transponder (12) as claimed in claim 3 or claim 4, which includes a comparator (60) which is configured or configurable to include a user determined voltage threshold (62), the voltage threshold (62) being comparable to the detected voltage peak which is relayed from the carrier peak detector (32).

6. A passive transponder (12) as claimed in claim 5, in which the comparator (60) is operable to trigger the Q factor controller (28) to change the resonator circuit (16) to its low Q factor mode when the detected voltage peak drops below the voltage threshold (62), in which mode the resonator circuit (16) is configured to receive the modulated data signal (44).

7. A passive transponder (12) as claimed in any of claims 4 to 6 inclusive, in which the resistive load (34, 36) is electrically removably connectable to the resonator circuit (16) by switching operation of an electrical switch (64, 66).

8. A passive transponder (12) as claim 2, in which the storage capacitor (26) is operable to provide electrical power to components of the transponder (12).

9. A method of operating a passive transponder (12), the method including:

receiving a powering signal (42) by a resonator circuit (16) of the transponder (12), the resonator circuit (16) including an antenna coil (18) and having a high Q factor mode and at least a portion of electrical energy received by the resonator circuit (16) being stored onboard by the transponder (12), **characterised in that** receiving said powering signal (42) by said resonator circuit (16) of the transponder (12) includes receiving a leading powering signal (42) from an interrogator (14) for powering the transponder (12), at least part of the electrical energy which is induced by inductive coupling of the transponder antenna coil (18) during transmission of the leading powering signal (42) being stored; lowering the Q factor of the resonator circuit (16), including switching the resonator circuit (16) of the transponder (12) to a low Q factor mode; receiving from said interrogator (14), a trailing modulated data signal (44) by the resonator circuit (16) of the transponder (12) during a time period when the resonator circuit (16) has the lowered Q factor; and demodulating the trailing modulated data signal (44).

10. A method as claimed in claim 9, which includes switching the resonator circuit (16) to the high Q factor mode before the leading powering signal (42) is received.

11. A method as claimed in claim 10, in which switching the resonator circuit (16) of the transponder (12) to the high Q factor mode and switching the resonator circuit (16) of the transponder (12) to the low Q factor mode include disconnecting and connecting a resistive load (34, 36) or a series resistance to the resonator circuit (16) respectively.

12. A method as claimed in any of claims 9 to 11 inclusive, in which storing at least part of the electrical energy which is induced by inductive coupling of the transponder antenna coil (18) during transmission of the leading powering signal (42) includes rectifying the voltage induced over the antenna coil (18) of the resonator circuit (16) and charging a storage capacitor (26) for supplying power to the transponder (12) after termination of the powering signal (42).

13. A method as claimed in any of claims 9 to 12 inclusive, in which switching the resonator circuit (16) of the transponder (12) to the low Q factor mode includes monitoring a decay of the induced voltage over the antenna coil (18) of the transponder (12) after termination of the powering signal (42).

14. A method as claimed in claim 13, in which a peak signal corresponding to the decay of the induced voltage is relayed to a comparator (60) which, in turn, compares the peak signal to a predetermined threshold (62).

15. A method as claimed in claim 14, in which the comparator (60) switches the resonator circuit (16) of the transponder (12) to its low Q factor mode in response to the peak signal dropping below the predetermined threshold voltage (62).

16. A method as claimed in any of claims 9 to 15 inclusive, in which receiving a trailing modulated data signal (44) by the transponder (12) includes receiving a burst of radio frequency signals (40) which comprise a series of varying amplitudes representative of digital data.

**Patentansprüche**

1. Ein passiver Transponder (12), welcher eine Resonatorschaltkreis (16) zum Empfang eines Antriebssignals (42) umfasst, um elektrische Energie durch induktive Kopplung für den Transponder (12) bereitzustellen, wobei die Resonatorschaltkreis (16) zwischen eine hohen Q-Faktor-Modus, in welchem eine induzierte Spannung in dem Resonatorschaltkreis (16) langsam abnimmt, und eine niedrigen Q-Faktor-Modus schaltbar ist, in welchem eine induzierte Spannung in dem Resonatorschaltkreis (16) schneller abnimmt, und wobei der Transponder (12) eine nergiespeicheranordnung (24) zum Speichern von zumindest einem Abschnitt der elektrischen Energie umfasst, welche durch das Antriebssignal (42) erhalten wurde, und wobei der Resonatorschaltkreis (16) eine Transponderantennenspule (18) zur induktiven Kopplung mit einer Interrogator-Antenne (22) aufweist, von welcher eine Reihe von Hochfrequenzsignalen übertragen werden oder übertragbar sind, **dadurch gekennzeichnet, dass** die Reihe von ochfrequenzsignalen ein führendes Antriebssignal (42) und ein folgendes moduliertes Datensignal (44) umfasst, und dadurch, dass die nergiespeicheranordnung (24) betreibbar ist, um zumindest einen Teil der elektrischen Energie zu speichern, welche durch induktive Kopplung der Transponderantennenspule (18) während der Übertragung des führenden Antriebssignals (42) induziert wirt, wobei der Transponder (12) weiterhin umfasst:

eine Demodulationsanordnung (68) zum Demodulierten des folgenden modulierten Datensignals (44); und eine Q-Faktor-Steuerung (28) zum Wechseln des Q-Faktors des Resonatorschaltkreises (16) zwischen einem hohen Q-Faktor-Modus, in welchem die Transponderantennenspule (18) konfiguriert ist zum Empfang des Antriebssignals (42), und einem niedrigen Q-Faktor-Modus, in welchem der Resonatorschaltkreis (16) konfiguriert ist zum Empfang des modulierten Datensignals (44).

2. Passiver Transponder (12) nach Anspruch 1, bei welche die Energiespeicheranordnung (24) einen Spannungsrichter (30) und einen Speicherkondensator (26) zum Richtigen der induzierten Spannung über die Antennenspule (18) des Transponders (12) umfasst, wobei die induzierte Spannung zum den des Speicherkondensators (26) verwender wird, um zumindest einen Teil der elektrischen Energie zu speichern, die durch induktive Koppelung der Transponderantennenspule (18) während der Übertragung des führenden Antriebssignals (42) induziert wirt.

**3.** Passiver Transponder (12) nach Anspruch 1 oder Anspruch 2, welcher einen Träger-Spitzen-Detektor (32) zum Detektierten oder Aufzeichnen einer Spannungsspitze der induzierten Spannung über die Antennenspule (18) des Transponder-Resonatorschalt-kreises (16) und zum Weitergeben eines Spitzensignals umfasst, welches für die detektierte Spannungsspitze für die Q-Faktor-Steuerung (28) repräsentativ ist.

**4.** Passiver Transponder (12) nach Anspruch 3, welcher eine ohmsche Last (34, 36) aufweist, welche elektrisch entfernbar mit dem Resonatorschaltkreis (16) zum Wechseln des Q-Faktors des Resonatorschaltkreises (16) zwischen dem hohen Q-Faktor-Moduls verbindbar ist, in welchem die Transponderantennenspule (18) zum Empfang des Antriebssignals (42) gestaltet ist, und dem niedrigen Q-Faktor-Moduls, in welchem der Resonatorschaltkreis (16) zum Empfang des modulierten Datensignals (44) gestaltet ist.

**5.** Passiver Transponder (12) nach Anspruch 3 oder Anspruch 4, welcher einen Vergleicher (60) umfasst, der gestaltet oder gestaltbar ist, um einen Spannungsschwellwert (62), der durch einen Benutzer bestimmt wird, aufzuweisen, wobei der Spannungsschwellwert (62) mit der detektierten Spannungsspitze vergleichbar ist, welche von dem Träger-Spitzen-Detektor (32) weitergegeben wird.

**6.** Passiver Transponder (12) nach Anspruch 5, bei welchem der Vergleicher (60) betätigbar ist, um auszulösen, dass die Q-Faktor-Steuerung (28) den Resonatorschaltreis (16) in ihren niedrigen Q-Faktor-Modus ändert, wenn die detektierte Spannungsspitze unterhalb des Spannungsschwellwerts (62) fällt, wobei in diesem Modus der Resonatorschaltkreis (16) zum Empfang des modulierten Datensignals (44) gestaltet ist.

**7.** Passiver Transponder (12) nach irgendeinem der Ansprüche 4 bis 6 einschließlich, bei welchem die ohmsche Last (34, 36) elektrisch entfernbar mit dem Resonatorschaltkreis (16) durch einen Schaltvorgang eines elektrischen Schalters (64, 66) verbindbar ist.

**8.** Passiver Transponder (12) nach Anspruch 2, bei welchem der Speicherkondensator (26) zur Bereitstellung von elektrischer Energie für die Komponenten des Transponders (12) betätigbar ist.

**9.** Verfahren zum Betätigen eines passiven Transponders (12), wobei das Verfahren umfasst:

Empfang eines Antriebssignals (42) durch einen Resonatorschaltkreis (16) des Transponder (12), wobei der Resonatorschaltkreis (16) eine Antennenspule (18) umfasst und einen hohen Q-Faktor-Modus aufweist, und wobei zumindest ein Abschnitt der elektrischen Energie, die durch den Resonatorschaltkreis (16) empfangen wurde, durch den Transponder (12) onboard gespeichert wird,

**dadurch gekennzeichnet, dass**
das Empfangen des Antriebssignals (42) durch den Resonatorschaltkreis (16) des Transponder (12) das Empfangen eines führenden Antriebssignals (42) von einem Interrogator (14) zum treiben des Transponders (12) umfasst, wobei zumindest ein Teil der elektrischen Energie gespeichert wird, welche durch induktives Koppeln der Transponderantennenspule (18) während der Übertragung des führenden Antriebssignals (42) induziert wird;
Absenken des Q-Faktors des Resonatorschaltkreises (16),
einschließlich des Schaltens des Resonatorschaltkreises (16) des Transponder (12) in einen niedrigen Q-Faktor-Modus;
Empfangen eines folgenden modulierten Datensignals (44) von dem Interrogator (14) durch den Resonatorschaltkreis (16) des Transponder (12) während Zeitabschnittes, in dem der Resonatorschaltreis (16) einen niedrigen Q-Faktor aufweist; und Demodulierten des folgenden modulierten Datensignals (44).

**10.** Verfahren nach Anspruch 9, welches ein Schalten des Resonatorschaltkreises (16) in den hohen Q-Faktor-Modus umfasst, bevor das führende Antriebssignal (42) empfangen wird.

**11.** Verfahren nach Anspruch 10, bei welchem das Schalten des Resonatorschaltkreises (16) von dem Transponder (12) in den hohen Q-Faktor-Modus und ein Schalten des Resonatorschaltkreises (16) des Transponders (12) in den niedrigen Q-Faktor-Modus jeweils ein Trennen und Verbinden einer ohmschen Last (34, 36) oder eines Reihenwiderstandes mit dem Resonatorschaltkreis (16) umfasst.

**12.** Verfahren nach irgendeinem der Ansprüche 9 bis 11 einschließlich, bei welche das Speichern zumindest eines Teils der elektrischen Energie, welche durch induktives Koppeln der Transponderantennenspule (18) während der Übertragung des führenden Antriebssignals (42) induziert wird, eine Berechtigung der Spannung umfasst, die über die Antennenspule (18) des Resonatorschaltkreises (16) induziert wurde, und ein Laden des Speicherkondensators (26) zur Bereitstellung von Energie für den Transponder (12) nach der Beendigung des Antriebssignals (42).

13. Verfahren nach irgendeinem der Ansprüche 9 bis 12 einschließlich, in welchem das Schalten des Resonatorschaltkreises (16) des Transponders (12) in den niedrigen Q-Faktor-Modus ein Aufzeichnen eines Absinkens der induzierten Spannung über die Antennenspule (18) des Transponders (12) nach Beendigung des triebssignals (42) umfasst.

14. Verfahren nach Anspruch 13, in welche ein Spitzensignal, welches dem Absinken der induzierten Spannung entspricht, an einen Vergleicher (60) weitergegeben wird, welcher das Spitzensignal wiederum mit einem vorgegebenen Schwellwert (62) vergleicht.

15. Verfahren nach Anspruch 14, bei welchem der Vergleicher (60) den Resonatorschaltkreis (16) des Transponders (12) in seinen niedrigen Q-Faktor-Modus als Antwort darauf schaltet, dass das Spitzensignal unter die vorgegebene Schwellwertspannung (62) fällt.

16. Verfahren nach irgendeinem der Ansprüche 9 bis 15 einschließlich, bei welchem das Empfangen eines folgenden modulierten Datensignals (44) durch den Transponder (12) das Empfangen eines Ausbruchs von Hochfrequenzsignalen (40) umfasst, welche eine Reihe von variierende Amplituden umfassen, die für digitale Daten repräsentativ sind.

## Revendications

1. Transpondeur passif (12), comprenant un circuit résonateur (16) pour recevoir un signal d'alimentation en énergie (42), de manière à fournir une énergie électrique au transpondeur (12) par couplage inductif, le circuit résonateur (16) étant commutable entre un mode à haut facteur Q, dans lequel une tension induite dans le circuit résonateur (16) s'évanouit lentement, et un mode à bas facteur Q, dans lequel une tension induite dans le circuit résonateur (16) s'évanouit plus rapidement, et le transpondeur (12) incluant un agencement de stockage d'énergie (24), pour stocker au moins une partie de l'énergie électrique obtenue du signal d'alimentation en énergie (42), ledit circuit résonateur (16) comprenant une bobine d'antenne de transpondeur (18), pour couplage inductif à une antenne d'interrogateur (22), à partir de laquelle une série de signaux à radiofréquence sont transmis ou sont susceptibles d'être transmis, **caractérisé en ce que** la série de signaux à radiofréquence comprend un signal d'alimentation en énergie de tête (42) et un signal à données modulées de queue (44), et ledit agencement de stockage d'énergie (24) étant susceptible de fonctionner pour stocker au moins une partie de l'énergie électrique ayant été induite par couplage inductif de la bobine d'antenne de transpondeur (18) durant la transmission du signal d'alimentation en énergie de tête (42), le transpondeur (12) comprend en outre :

un agencement de démodulation (68), pour démodulation du signal à données modulées de queue (44) ; et
un contrôleur de facteur Q (28), pour modification du facteur Q du circuit résonateur (16), entre ledit mode à haut facteur Q, mode dans lequel la bobine d'antenne de transpondeur (18) est configurée pour recevoir le d'alimentation en énergie (42), et ledit mode à bas facteur Q, mode dans lequel le circuit résonateur (16) est configuré pour recevoir le signal à données modulées (44).

2. Transpondeur passif (12) selon la revendication 1, dans lequel l'agencement de stockage d'énergie (24) comprend un redresseur de tension (30) et un condensateur de stockage (26), pour redresser la tension induite sur la bobine d'antenne (18) du transpondeur (12), tension induite qui est appliquée pour charger le condensateur de stockage (26) pour stocker au moins une partie de l'énergie électrique qui est induite par couplage inductif de la bobine d'antenne de transpondeur (18) durant la transmission du signal d'alimentation en énergie de tête (42).

3. Transpondeur passif (12) selon la revendication 1 ou la revendication 2, comprenant un détecteur de crête de porteuse (62), pour détecter ou surveiller une crête de tension de la tension induite sur la bobine d'antenne (18) du circuit résonateur (16) de transpondeur et pour relayer un signal de crête représentatif de ladite crête de tension détectée au contrôleur de facteur Q (28).

4. Transpondeur passif (12) selon la revendication 3, comprenant une charge résistive (34, 36), susceptible d'être connectée de manière isolable électriquement au circuit résonateur (16), pour modifier le facteur Q du circuit résonateur (16), entre le mode à haut facteur Q, mode dans lequel la bobine d'antenne de transpondeur (18) est configurée pour recevoir le signal d'alimentation en énergie (42), et le mode à bas facteur Q, mode dans lequel le circuit résonateur (16) est configuré pour recevoir le signal à données modulées (44).

5. Transpondeur passif (12) selon la revendication 3 ou la revendication 4, comprenant un comparateur (60), configuré ou susceptible d'être configuré pour inclure seuil de tension (62) déterminé par l'utilisateur, le seuil de tension (62) étant comparable à la crête de tension détectée, relayée à partir du détecteur de crête de porteuse (32).

6. Transpondeur passif (12) selon la revendication 5, dans lequel le comparateur (60) est susceptible de fonctionner pour déclencher le contrôle de facteur Q (28), pour faire passer le circuit résonate (16) à son mode à bas facteur Q, lorsque la crête de tension détectée chute au-dessous du seuil de tension (62), mode dans lequel le circuit résonateur (16) est configuré pour recevoir le signal à données modulées (44).

7. Transpondeur passif (12) selon l'une quelconque des revendications 4 à 6 inclusivement, dans lequel la charge résistive (34, 36) est susceptible d'être connectée de manière isolable électriquement au circuit résonateur (16), par une opération de commutation d'un commutateur électrique (64, 66).

8. Transpondeur passif (12) selon la revendication 2, dans lequel le condensateur de stockage (26) est susceptible de fonctionner pour fournir une énergie électrique à des composantes du transpondeur (12).

9. Procédé de fonctionnement d'un transpondeur passif (12), le procédé comprenant :

la réception d'un signal d'alimentation en énergie (42) par un circuit résonateur (16) du transpondeur (12), le circuit résonateur (16) incluant une bobine d'antenne (18) et ayant un mode à haut facteur Q et au moins une partie de l'énergie électrique reçue par le circuit résonateur (16) étant stockée à bord par le transpondeur (12), **caractérisé en ce que** la réception dudit signal d'alimentation en énergie (42) par ledit circuit résonateur (16) du transpondeur (12) inclut la réception d'un signal d'alimentation en énergie de tête (42) à partir d'un interrogateur (14), pour alimenter en énergie le transpondeur (12), au moins une partie de l'énergie électrique induite par couplage inductif de la bobine d'antenne de transpondeur (18) durant la transmission du signal d'alimentation en énergie de tête (42) étant stockée ;
l'abaissement du facteur Q du circuit résonateur (16), incluant la commutation du circuit résonateur (16) du transpondeur (12) en un mode à bas facteur Q ;
la réception , à partir dudit interrogateur (14), d'un signal de données modulées de queue (44) par le circuit résonateur (16) du transponder (12), durant une période de temps pendant laquelle le circuit résonateur (16) le facteur Q diminué ; et

la démodulation du signal de données modulées de queue (44).

10. Procédé selon la revendication 9, comprenant la computation du circuit résonateur (16) pour passage au mode à haut facteur Q, avant que le signal d'alimentation en énergie (42) ait été reçu.

11. Procédé selon la revendication 10, dans lequel la commutation du circuit résonateur (16) du transpondeur (12) au mode à haut facteur Q et la commutation du circuit résonateur (16) du transpondeur (12) pour passage au mode à bas facteur Q comprennent la déconnexion et la connexion d'une charge résistive (35, 36) ou d'une résistance en série au circuit résonateur (16), respectivement.

12. Procédé selon l'une quelconque des revendications 9 à 11 y compris, dans lequel le stockage d'au moins une partie de l'énergie électrique ayant été induite par couplage inductif de la bobine d'antenne de transpondeur (18), durant la transmission du signal d'alimentation en énergie de tête (42), comprend le redressement de la tension induite sur la bobine d'antenne (18) du circuit résonateur (16) et la charge d'un condensateur de stockage (26), pour fournir de l'énergie au transpondeur (12) disparition du signal d'alimentation en énergie (42).

13. Procédé selon l'une quelconque des revendications 9 à 12 y compris, dans lequel la computation du circuit résonateur (16) du transpondeur (12) pour passage au mode à bas facteur Q comprend la surveillance d'un évanouissement de la tension induite sur la bobine d'antenne (18) du transpondeur (12), après disparition du signal d'alimentation en énergie (42).

14. Procédé selon la revendication 13, dans lequel un signal de crête, correspond à l'évanouissement de la tension induite, est relayé à un comparateur (60) qui, à son tour, compare le signal de crête à un seuil (62) prédétermine.

15. Procédé selon la revendication 14, dans lequel le comparateur (60) commute le circuit à résonnance (16) du transpondeur (12) à son mode à bas facteur Q, en réponse à la chute du signal de crête au-dessous de la due seuil 62) prédéterminée.

16. Procédé selon l'une quelconque des revendications 9 à 15 y compris, dans lequel la réception d'un signal de données modulées de queue (44) par le transpondeur (12) comprend la réception d'une rafale de signaux à radiofréquence (40), comprenant une série d'amplitude variables, représentatives de données numérique.

FIG 1

FIG 2

EP 1 927 072 B1

**FIG 3**

**EP 1 927 072 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9939450 A
- EP 1473663 A
- WO 02091290 A